# EUROPEAN PATENT APPLICATION

(11) **EP 2 514 516 A1**
(43) Date of publication of application: **24.10.2012**
(21) Application number: 11163356.6
(22) Date of filing: 21.04.2011
(51) Int. Cl.: B01J 8/02, F23C 99/00, A01G 7/02, A01G 9/18

(54) **Fixed bed filling composition**

(71) Applicant: Nederlandse Organisatie voor Toegepast -Natuurwetenschappelijk Onderzoek TNO, 2628 VK Delft (NL)
(72) Inventor: Geerdink, Peter, 2628 VK Delft (NL); van den Broeke, Leo Jacques Pierre, 2628 VK Delft (NL); Huizinga, Arjen, 2628 Delft (NL); Jahn, Judith, 2628 Delft (NL); van den Bos, Willempje Antonie Patricia, 2628 Delft (NL)
(74) Representative: Jansen, Cornelis Marinus

(57) **Abstract**

The invention is directed to a fixed bed filling composition, to a method for preparing said fixed bed filling composition, and to a method for reducing or preventing sintering of chemically reactive particles in a fixed bed. More in particular, the invention relates to a method for fixed bed chemical looping combustion with reduced sintering.

The fixed bed filling composition of the invention comprises a mixture of chemically reactive particles with an inert particulate material, wherein a first part of said inert particulate material has an average particle size larger than the average particle size of said chemically reactive particles, and a second part of said inert particulate material has an average particle size smaller than the average particle size of said chemically reactive particles.

## Description

The invention is directed to a fixed bed filling composition, to a method for preparing said fixed bed filling composition, and to a method for reducing or preventing sintering of chemically reactive particles in a fixed bed. More in particular, the invention relates to a method for fixed bed chemical looping combustion with reduced sintering.

The process called chemical looping combustion (CLC) is based on combustion with the use of an intermediate oxygen carrier that is generally cycled between two reactors, i.e. an oxidising reactor and a reducing reactor. In the oxidising reactor, metal particles are brought into contact with air to produce metal oxides and heat, which can subsequently be used for different purposes. The heat can, for example, be transformed into electricity. The reducing reactor contacts the fuel, in general methane, with the metal oxides to create metal once again and also CO₂ and water, while chemically storing the energy of the methane. The reducing reaction is endothermic (Hossain et al., Chemical engineering science 2008, 63, 4433-4451).

Most research is focussed on an application of CLC using fluidised beds. Generally fluidised bed technology is proven in industry in combustion processes. The inventors, however, focus on a fixed bed application of CLC. In fluidised beds, cycle times, attrition and fuel conversion are key factors. Most research is therefore based on finding the ideal oxygen carrier that has a long lifetime and high reactivity. These oxygen carriers will therefore be expensive, custom made materials. When a fixed bed is used, the main challenges are to avoiding cokes formation and sintering. Cokes formation makes oxygen carriers unavailable and blocks the "actives sites" of the oxygen carriers. Sintering means coagulation of the metal particles, which limits available oxygen carrier surface. In addition, sintering will result in preferred flow and eventually will block gas flow through the bed. Besides this, the use of inexpensive materials is the key to the development of CLC, since it is important to make the whole system financially feasible, because the cycle times in fixed beds are much longer and therefore more oxygen carrier is required for a system.

A small scale CLC setup for the use in greenhouses is described in WO-A-2006/123925. This document describes a method for regulating the heat and the CO₂ concentration of the air in greenhouses. At night and during cold periods heat is required in greenhouses to keep the temperature at a desired level. During the day and during warm periods, CO₂ is required to increase the plant production rate. Conventionally, natural gas is burned for greenhouses to produce CO₂ during the day and during warm periods. At the same time, the produced heat is stored in the form of hot water acting as a buffer to store the heat. The heat stored in the water buffers is then used at night or during cold periods. In this way, by combining the production of CO₂ with the storage of heat, energy losses are reduced. However, a more optimal solution is possible when the heat and the CO₂ are available when needed. This requires that the production of heat and CO₂ are decoupled, which is possible using CLC. In accordance with the method described in WO-A-2006/123925 an oxygen-containing gas and a hydrocarbon-containing gas are alternately passed over particles that are capable of binding oxygen. The oxygen-containing gas oxidises the particles while releasing heat, while the hydrocarbon-containing gas reduces the oxidised particles under formation of water and CO₂. In accordance with this process, the CO₂ production and the heat production are separated, while losses are minimised.

In the process of WO-A-2006/123925 a number of packed-bed CLC reactors are placed in parallel, such that the oxidation and reduction step can be performed independently. As a result, a system is obtained with a large flexibility in the amount of CO₂ and/or heat that can be produced at a specific moment. This allows an optimal adaptation of greenhouses to the varying weather conditions. Storage of heat in a CLC packed-bed reactor can be achieved without any significant losses.

As in all CLC processes, the oxygen carrier plays a vital role in optimising the performance of the process. It is important that the capacity of the oxygen carrier is high, because a large buffer capacity is desired. For a packed bed configuration the reactivity of the oxygen carrier is less important, because in a packed bed the fuel has a much longer contact time with the oxygen carrier, as compared to the situation of a fluidised bed. Another factor that plays a critical role is the price of the oxygen carrier. In order to store a large amount of heat in the packed bed, a large amount of oxygen carrier is required.

The inventors found that fixed beds filled with only oxygen carrier material (such as iron particles) suffer from sintering, which makes that the bed becomes impermeable. This significantly limits the efficacy of the oxygen carrier material, and accordingly results in CO formation. Obviously, this is undesirable.

This problem of sintering does not only occur in the field of chemical looping combustion, but is for instance also frequently encountered in catalytic processes, especially catalytic reactions that require high temperatures.

Objective of the invention is therefore to provide a fixed bed filling composition, which suffers less, and preferably does not suffer, from the above-identified sintering phenomenon.

It was surprisingly found that this objective can be met by a specific addition of an inert particulate material.

Accordingly, in a first aspect the invention is directed to a fixed bed filling composition comprising a mixture of chemically reactive particles with an inert particulate material, wherein a first part of said inert particulate material has an average particle size larger than the average particle size of said chemically reactive particles, and a second part of said inert particulate material has an average particle size smaller than the average particle size of said chemically reactive particles.

The composition of the invention comprises an inert particulate material having at least two parts with distinct average particle size. The large particle size functions to lower the pressure drop over a fixed bed reactor, while the smaller particle size prevents, or at least reduces significantly, sintering of the chemically reactive particles.

The inert particulate material suitably comprises one or more selected from the group consisting of silica, silica carbide, ceramic, and glass. Particularly suitable for the invention are sand, glass, and/or ceramics. Of these materials ceramics is the most preferred, since it can advantageously be used up to temperatures of 1300 °C. On the other hand, sand may be favoured in view of costs.

The amount of the inert particulate material in the fixed bed filling composition may vary and can depend on the application for which the fixed bed filling composition is intended. Typically, the volume ratio between the chemically reactive particles and the inert particulate material in the fixed bed filling composition can range from 10:90 to 90:10. Preferably, inert particulate material is present in an amount of 20-80 vol.%, based on total volume of the fixed bed filling composition, more preferably in an amount of 30-70 vol.%.

The term "average particle size" as used in this application is meant to refer to the mean average diameter of the particles (also referred to in the art as "effective diameter", *viz*. the mean volume diameter, which is equivalent to the diameter of a sphere of equal volume to the particle being measured). The average particle size may be determined by measuring the diameter of a representative number of particles (such as 100) from a micrograph and calculate the average. Further details concerning techniques for measuring the average particle size of the metallic particles are known to those skilled in the art.

A first part of the inert particulate material in the fixed bed filling composition of the invention has an average particle size which is larger than the average particle size of the chemically reactive particles. This first part may for instance be at least 10 vol.% of the total inert particulate material, preferably at least 25 vol.%, more preferably at least 40 vol.%.

In an embodiment, the average particle size of the first part of the inert particulate material is at least 120 % of the average particle size of the chemically reactive particles. The average particle size of the first part of the inert particulate material may, for example, be at least 150 % of the average particle size of the chemically reactive particles, such as at least 200 %, or at least 300 % of the average particle size of the chemically reactive particles. Normally, the average particle size of the first part of the inert particulate material will not exceed 400 % of the average particle size of the chemically reactive particles.

A second part of the inert particulate material in the fixed bed filling composition of the invention has an average particle size which is smaller than the average particle size of the chemically reactive particles. This second part may for instance be at least 10 vol.% of the total inert particulate material, preferably at least 25 vol.%, more preferably at least 40 vol.%.

In an embodiment, the average particle size of the second part of inert particulate material is at most 80 % of the average particle size of the chemically reactive particles. The average particle size of the second part of the inert particulate material may, for example, be at most 70 % of the average particle size of the chemically reactive particles, such as at most 60 %, or at most 50 % of the average particle size of the chemically reactive particles. Normally, the average particle size of the first part of the inert particulate material will not be smaller than 25 % of the average particle size of the chemically reactive particles.

In accordance with the invention the chemically reactive particles, including oxygen carrier particles and other types of particles such as heterogeneous catalyst particles, suitably have an average particle size in the range of 1-500 µm, such as in the range of 5-250 µm. The applied average particle size of the chemically reactive particles depends on the purpose for which the fixed bed filling composition is used.

It is preferred that the chemically reactive particles are monodisperse, so that the particles have one major peak in the particle size distribution. If the chemical reactive particles are polydisperse, then the first part of the inert particulate material preferably has an average particle size that is larger than the largest major particle size peak in the particle size distribution of the chemically reactive particles and the second part of the inert particulate material preferably has an average particle size that is smaller than the smallest major particle size peak in the particle size distribution of the chemically reactive particles. In this respect a particle size peak is considered "major" if it represents at least 20 % of the particles.

The chemically reactive particles can have a mean particle size D50 as measured by microscopy in the range of 1-500 µm, such as in the range of 2-400 µm. The chemically reactive particles preferably have a mean particle size D90 as measured by microscopy in the range of 5-200 µm, such as in the range of 7-150 µm. Depending on the particle size, the particle size distribution can for this purpose be determined by various measurement methods well-known to the person skilled in the art, including sieve analyses, optical microscopy, optical counting methods, electric counting methods, and sedimentation techniques.

The chemically reactive particles suitably comprise a metal or metal oxide, and optionally a carrier material. In a preferred embodiment, the chemically reactive particles are oxygen carrier particles. The metal can, for instance, be selected from the group consisting of copper, iron, nickel, cobalt and manganese. The metal may be present in reduced metal form or oxidised derivative state. The carrier material is preferably selected from the group consisting of alumina, silica, zirconia, and titania.

In a further aspect, the invention is directed to a method for preparing the fixed bed filling composition of the invention. This method comprises mixing chemically reactive particles with an inert particulate material, wherein a first part of said inert particulate material has an average particle size larger than the average particle size of said chemically reactive particles, and a second part of said inert particulate material has an average particle size smaller than the average particle size of said chemically reactive particles. Any conventional mixing technique can be used for this purpose.

The fixed bed filling composition of the invention can, for example, be applied in catalytic processes, in particular in catalytic reactions that require high temperatures. Furthermore, the fixed bed filling composition of the invention can advantageously be used in fixed bed chemical looping combustion.

Accordingly, in yet a further aspect, the invention is directed to a method for reducing or preventing sintering of chemically reactive particles in a fixed bed. In accordance with this method a fixed bed is filled with the fixed bed filling composition of the invention.

A highly preferred process in which the fixed bed filling composition of the invention can suitably be applied is fixed bed chemical looping combustion, wherein two types of processes are both carried out over a fixed bed of particles in an alternating manner.

For example, the method for reducing or preventing sintering of chemically reactive particles in a fixed bed may relate to a process for regulating carbon dioxide and heat release, for instance in greenhouses.

Accordingly, in an embodiment the invention is directed to a method for regulating the heat and the carbon dioxide concentration of the air in an enclosed space within which plants and/or crops are grown, comprising
- alternately passing an oxygen-containing gas over a first fixed bed and a hydrocarbon-containing and/or hydrogen-containing gas over a second fixed bed, said first and second fixed bed optionally being the same bed, and at least one of said first fixed bed and said second fixed bed being filled with a fixed bed filling composition according to the invention, wherein the oxygen-containing gas is passed over the fixed bed under conditions whereby the chemically reactive particles are oxidised and heat is released, after which part of the heat is provided to the enclosed space, and wherein the hydrocarbon-containing and/or hydrogen-containing gas is passed over the fixed bed under conditions whereby the chemically reactive particles are chemically reduced and water and carbon dioxide are formed, after which at least part of the formed carbon dioxide is provided to the enclosed space.

The use of the fixed bed filling composition of the invention advantageously gives rise to a reduced pressure drop while maintaining high conversion of fuel gas. The expectation of the skilled person would be that the addition of inert material will lead to substantially larger equipments high pressure drops and poor flow behaviour. It was found, however, that the use of a fixed bed filling composition of the invention surprisingly leads to major gains (small pressure drop and improved stability of the system), while only requiring a small increase of the reactor dimensions (length and diameter). Without wishing to be bound by theory, the inventors believe that the careful selection of materials gives rise to a kind of shielding of the chemically reactive particles. This shielding reduces, and preferably prevents, further sintering of the chemically reactive particles. Pressure drop is a very important topic for the further scale up of fixed bed chemical looping combustion systems.

The oxidation and reduction of the chemically reactive particles are preferably carried out in a single reactor, whereby the oxygen-containing gas and hydrocarbon-containing and/or hydrogen-containing gas are alternately passed over the same fixed bed. However, it is also possible that the oxidation and reduction of the chemically reactive particles are carried out in separate reactors which each contain a fixed bed, and the oxygen-containing gas and hydrocarbon-containing and/or hydrogen-containing gas are periodically switched for establishing oxidation and chemical reduction of the chemically reactive particles in each of the fixed beds in the respective reactors.

In a preferred embodiment, porous ceramic or metal pipes are used to distribute the oxygen-containing gas and hydrocarbon-containing and/or hydrogen-containing gas over the fixed bed(s) at a low-pressure drop.

Suitably, the oxidation of the chemically reactive particles takes place at a temperature in the range of 100-1500 °C and a pressure in the range of 0-100 bar. Preferably, the oxidation of the chemically reactive particles takes place at a temperature in the range of 500-1000 °C and a pressure drop in the range of 0-3 bar.

Suitably, the chemical reduction of the chemically reactive particles takes place at a temperature in the range of 300-1500 °C and a pressure in the range of 0-100 bar. Preferably, the chemical reduction of the chemically reactive particles takes place at a temperature in the range of 600-1100 °C and a pressure drop in the range of 0-3 bar.

The hydrocarbon-containing gas to be used suitably comprises one or more gaseous hydrocarbons. Preferably, the hydrocarbon-containing gas comprises propane, butane, or any hydrocarbon that is gaseous at reactor operating temperature and pressure conditions. More preferably, the hydrocarbon containing gas comprises natural gas or methane. The oxygen-containing gas to be used preferably comprises air. In the alternative, or in addition to the hydrocarbon-containing gas, a hydrogen-containing gas may suitably be used, such as synthetic gas (also known as "syngas", a gas mixture containing carbon monoxide and hydrogen).

Preferably, the carbon dioxide production occurs when photosynthesis takes place in the enclosed space. Generally, this will be during the day or in the evening when assimilation lighting is used. The enclosed space is preferably a greenhouse, as used, for instance, in horticulture under glass.

Suitably, the heat released during the oxidation of the chemically reactive particles is (partly) stored in the fixed bed of the reactor before it is used to drive the formation of carbon dioxide during the chemically reduction of the oxidised particles when the hydrocarbon-containing and/or hydrogen-containing gas is passed over the bed of oxidised particles. For this purpose the heat capacity of the fixed bed is in general sufficient. Likewise, oxygen bound by the bed can be stored by means of increasing the oxidation level of the particle bed. The amounts of heat and oxygen stored in the fixed bed represent a carbon dioxide production potential, which on demand can be released through injection of a hydrocarbon-containing and/or hydrogen-containing gas. The reactor then functions as an integrated heat and carbon dioxide buffer which can store heat and carbon dioxide for days, and when appropriately sized even for weeks or months. Alternatively, carbon dioxide produced can be stored before it is passed to the enclosed space. For this purpose, for instance, a pressurised gas buffer can be used. From such pressurised gas buffer carbon dioxide can subsequently be released when the demand for carbon dioxide has increased within the enclosed space. Alternatively, carbon dioxide can be supplied from a pressurised gas buffer to an external consumer. The inert material can advantageously be used for "storage" of heat. For this purpose sand (SiO₂) is the preferred inert material.

Next, the invention will be illustrated in more detail by the following Examples.

### Examples

In the following Examples the average particle size of the used particulate materials was as follows as measured by microscopy:
Sand I (SiO₂): average particle size 201-297 µm (50-70 mesh)
Sand II (SiO₂): average particle size > 63 µm (< 230 mesh)
Iron particles: average particle size < 212 µm (> 50 mesh)

### Example 1

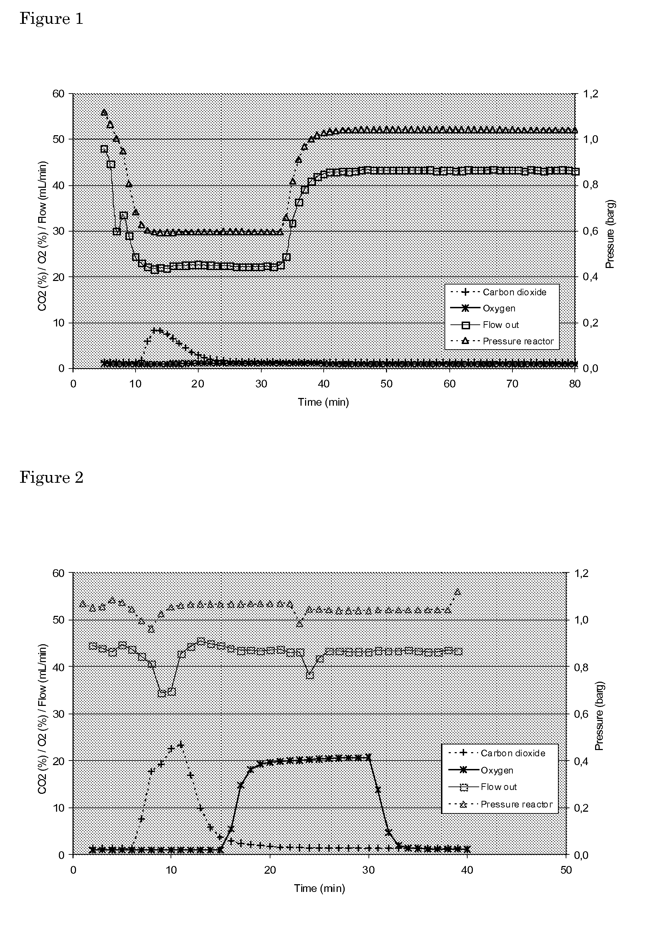

A gaseous mixture of N₂ (50 vol.%), CO (12.5 vol.%) and H₂ (37.5 vol.%) was passed over a fixed bed at reduction conditions and at a flow rate of 40 ml/min. The fixed bed comprised Sand I (50 vol.%) and Sand II (50 vol.%) and did not contain chemically reactive particles. As seen in Figure 1, little CO₂ is produced in the first stage of the experiment and subsequently the reaction stops and no more CO₂ is produced. In Figure 1 the oxygen fraction, the carbon dioxide fraction, the total flow out of the reactor and the pressure (right y-axis) are depicted as function of the time.

### Example 2

In this Example, the reduced oxygen carrier particles of Example 1 were oxidised. The sequence of reduction and oxidation was repeated for a number of stages. Air was passed over a fixed bed at oxidation conditions and at a flow rate of 40 ml/min. The fixed bed comprised Sand I (50 vol.%) and Sand II (50 vol.%) and did not contain chemically reactive particles. As seen in Figure 2, during the first stage (reduction stage) CO₂ is produced because of deposits of carbon, produced during the reduction. Subsequently, during the oxidation stage, no more CO₂ is produced and oxygen is measured in the exiting gas stream. In Figure 2, the carbon dioxide fraction, the oxygen fraction, the total flow out of the reactor and the pressure (right y-axis) are depicted as function of the time.

### Example 3

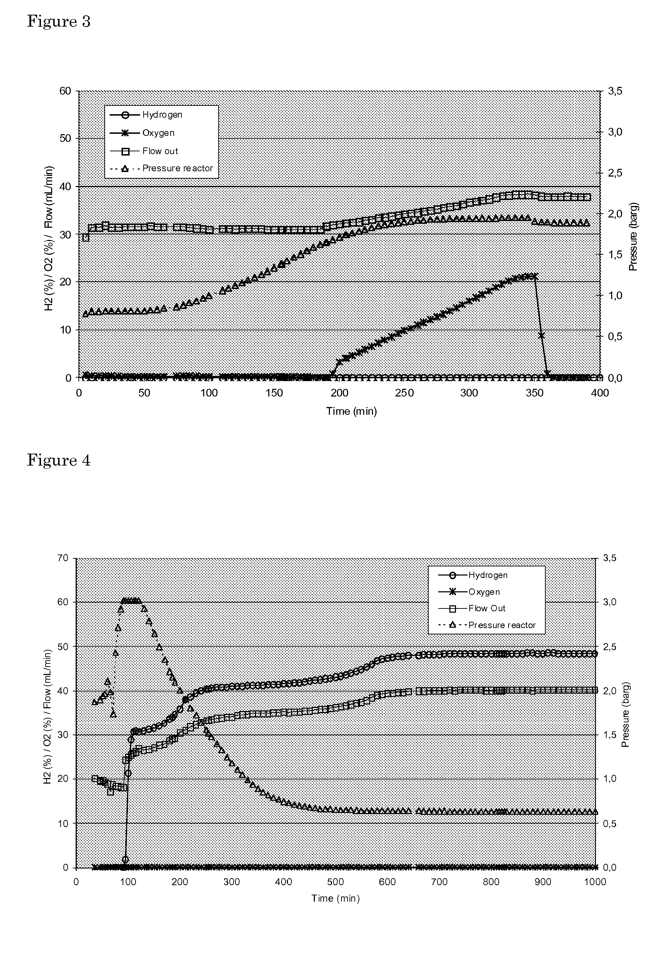

Air was passed over a fixed bed at oxidation conditions and at a flow rate of 40 ml/min. The fixed bed comprised Sand I (37.5 vol.%), Sand II (37.5 vol.%), and iron particles (25 vol.%). As seen in Figure 3, during the oxidation reaction a pressure increase from about 1 bar to about 2 bars is observed. This is a typical pressure increase observed for oxidation reactions. In Figure 3, the hydrogen fraction, the oxygen fraction, the total flow out of the reactor and the pressure (right y-axis) are depicted as function of the time.

### Example 4

A gaseous mixture of N₂ (50 vol.%), CO (12.5 vol.%) and H₂ (37.5 vol.%) was passed over a fixed bed at reduction conditions and at a flow rate of 40 ml/min. The fixed bed comprised Sand I (37.5 vol.%), Sand II (37.5 vol.%) and iron particles (25 vol.%). As seen in Figure 4, first an increase in the pressure from 2 to 3 bars is observed at the start of the reduction of the iron particles, the final pressure is again about 1 bar, and this is equal to the pressure at the start of the oxidation reaction. The sand kept the particles in the bed from sintering together and prevented that the bed became impermeable. In Figure 4 the hydrogen fraction, the oxygen fraction, the total flow out of the reactor and the pressure (right y-axis) are depicted as function of the time.

## Claims

1. Fixed bed filling composition comprising a mixture of chemically reactive particles with an inert particulate material, wherein a first part of said inert particulate material has an average particle size larger than the average particle size of said chemically reactive particles, and a second part of said inert particulate material has an average particle size smaller than the average particle size of said chemically reactive particles.

2. Fixed bed filling composition according to claim 1, wherein said inert particulate material comprises one or more selected from the group consisting of silica, silica carbide, ceramic, and glass.

3. Fixed bed filling composition according to claim 1 or 2, wherein the first part of said inert particulate material is at least 10 vol.% of the total inert particulate material, preferably at least 25 vol.%, such as at least 40 vol.%.

4. Fixed bed filling composition according to any one of claims 1-3, wherein the second part of said inert particulate material is at least 10 vol.% of the total inert particulate material, preferably at least 25 vol.%, such as at least 40 vol.%.

5. Fixed bed filling composition according to any one of claims 1-4, wherein the chemically reactive particles have an average particle size in the range of 1-500 µm, preferably in the range of 5-250 µm.

6. Fixed bed filling composition according to any one of claims 1-5, wherein the average particle size of said first part of said inert particulate material is at least 120 % of the average particle size of the chemically reactive particles, preferably at least 150 %, more preferably at least 200 %, such as at least 300 % of the average particle size of the chemically reactive particles.

7. Fixed bed filling composition according to any one of claims 1-6, wherein the average particle size of said second part of said inert particulate material is at most 80 % of the average particle size of the chemically reactive particles, preferably at most 70 %, more preferably at most 60 %, such as at most 50 % of the average particle size of the chemically reactive particles.

8. Fixed bed filling composition according to any one of claims 1-7, wherein the chemically reactive particles have a mean particle size D50 in the range of 1-500 µm, preferably the chemically reactive particles have a mean particle size D90 in the range of 5-200 µm.

9. Fixed bed filling composition according to any one of claims 1-8, wherein said chemically reactive particles comprise a metal or metal oxide, and optionally a carrier material.

10. Fixed bed filling composition according to claim 9, wherein said metal is selected from the group consisting of copper, iron, nickel, cobalt and manganese.

11. Fixed bed filling composition according to any one of claims 1-10, wherein said chemically reactive particles are oxygen carrier particles.

12. Method for preparing a fixed bed filling composition according to any one of claims 1-11, comprising mixing chemically reactive particles with an inert particulate material, wherein a first part of said inert particulate material has an average particle size larger than the average particle size of said chemically reactive particles, and a second part of said inert particulate material has an average particle size smaller than the average particle size of said chemically reactive particles.

13. Method for reducing or preventing sintering of chemically reactive particles in a fixed bed comprising filling said fixed bed with a fixed bed filling composition according to any one of claims 1-11.

14. Method according to claim 12 for regulating the heat and the carbon dioxide concentration of the air in an enclosed space within which plants and/or crops are grown, comprising
- alternately passing an oxygen-containing gas over a first fixed bed and a hydrocarbon-containing and/or hydrogen-containing gas over a second fixed bed, said first and second fixed bed optionally being the same bed, and at least one of said first fixed bed and said second fixed bed being filled with a fixed bed filling composition according to any one of claims 1-11,
wherein the oxygen-containing gas is passed over the fixed bed under conditions whereby the chemically reactive particles are oxidised and heat is released, after which part of the heat is provided to the enclosed space, and wherein the hydrocarbon-containing and/or hydrogen-containing gas is passed over the fixed bed under conditions whereby the chemically reactive particles are chemically reduced and water and carbon dioxide are formed, after which at least part of the formed carbon dioxide is provided to the enclosed space.

15. Method according to claim 13, wherein the heat released during the oxidation of the particles is (partly) stored before it is used to drive the formation of carbon dioxide during the chemical reduction of the oxidised particles when the hydrocarbon-containing and/or hydrogen-containing gas is passed over the bed of the oxidised particles.
